Europäisches Patentamt

European Patent Office

Office européen des brevets

(11) Publication number: **0 212 920 B1**

# EUROPEAN PATENT SPECIFICATION

(45) Date of publication of patent specification: **14.03.90**

(21) Application number: **86306128.9**

(22) Date of filing: **07.08.86**

(51) Int. Cl.⁵: **G 21 C 7/10**

(54) **Full length control rod employing axially inhomogeneous absorber materials for zero reactivity redistribution factor.**

(30) Priority: **08.08.85 US 763736**

(43) Date of publication of application:
**04.03.87 Bulletin 87/10**

(45) Publication of the grant of the patent:
**14.03.90 Bulletin 90/11**

(84) Designated Contracting States:
**BE DE FR GB IT SE**

(56) References cited:
**EP-A-0 175 455**
**DE-A-2 900 801**
**FR-A-2 321 174**
**FR-A-2 519 178**
**FR-A-2 570 214**
**US-A-3 230 147**

(73) Proprietor: **WESTINGHOUSE ELECTRIC CORPORATION**
**Westinghouse Building Gateway Center**
**Pittsburgh Pennsylvania 15235 (US)**

(72) Inventor: **Nguyen, Tho Quoc**
**3930 Old Wm. Penn Hwy., Apt. 322**
**Pittsburgh Pennsylvania 15235 (US)**

(74) Representative: **van Berlyn, Ronald Gilbert**
**23, Centre Heights**
**London, NW3 6JG (GB)**

Courier Press, Leamington Spa, England.

## Description

The present invention relates generally to nuclear reactors and, more particularly, to an improved control rod for use with a nuclear fuel assembly in reactor shutdown.

In a typical nuclear reactor, the reactor core includes a large number of fuel assemblies each of which is composed of top and bottom nozzles, a plurality of elongate transversely spaced control-rod guide thimbles extending between the nozzles, a plurality of transverse grids axially spaced along the guide thimbles, and a plurality of elongate fuel elements or rods transversely spaced apart from one another and from the guide thimbles and supported by the grids between the top and bottom nozzles. The fuel rods each contain fissile material and are grouped together in an array which is organized so as to provide a neutron flux in the core sufficient to support a high rate of nuclear fission and thus the release of a large amount of energy in the form of heat. A liquid coolant is pumped upwardly through the core in order to extract some of the heat generated therein for the production of useful work.

Since the rate of heat generation in the reactor core is proportional to the nuclear fission rate and this, in turn, is determined by the neutron flux in the core, control of heat generation at reactor-start-up, during its operation, and at shutdown is achieved by varying the neutron flux. One common way of doing this is by absorbing excess neutrons through use of control rods which contain neutron absorbing material, the guide thimbles being employed as channels for insertion of the neutron absorber control rods within the reactor core. The level of neutron flux and thus the heat output of the core are normally regulated by the movement of the control rods into and from the guide thimbles. Representative of the prior art are the control rods and systems disclosed in U.S. patents Nos. 3,088,898, 3,230,147, 3,255,086, 3,485,717, 3,519,535, 3,734,825, 4,123,328, 4,126,759 and 4,172,762.

One common arrangement utilizing control rods in association with a fuel assembly is described in Applicant's U.S.-A-4,326,919 which shows an array of control rods supported at their upper ends by a spider assembly which in turn is connected to a control rod drive mechanism for vertically lowering and raising (referred to as a stepping action) the control rods in the hollow guide thimbles of the fuel assembly. Each of the control rods used in such an arrangement consists typically of an elongate metallic cladding tube containing a neutron absorbing material and sealed at its opposite ends by means of end plugs. Generally, the neutron absorbing material is one having a high neutron absorption cross-section, such as boron carbide, tantalum, a combination of silver-indium-cadmium, or one of many other neutron-absorbing materials known in the art. The material is ordinarily in the form of a stack of closely packed ceramic or metal pellets which only partially fill the tube, leaving between the top of the pellets and the upper end plug a void space or axial gap which defines a plenum chamber for receiving gasses generated during operation. A coil spring is disposed within the plenum chamber and is held in a state of partial compression between the upper end plug and the top pellet so as to maintain the pellets firmly stacked during stepping of the control rod.

At end of cycle life (EOL) and hot zero power (HZP) core condition in reactors, there usually occurs an adverse power (flux) distribution shift to the top of the core. For instance, the axial flux imbalance (AFI) for a typical pressurized water reactor is on the order of 50 to 60%. With such an extreme AFI, there is a significant reactivity redistribution which nuclear designers have to account for in accident analysis by way of a reactivity penalty on available rod worth. The penalty, commonly known as reactivity redistribution factor (RRF), is approximately 0.85% delta p at EOL and accounted for in the shutdown margin calculation.

The control rod designs used heretofore have failed to adequately alter this imbalance in the core axial power distribution at reactor shutdown, and therefore it is the principal object of the invention to counteract this situation so as to reduce RRF during reactor shutdown.

Broadly, the invention attains its principal object by providing a control rod employing axially inhomogeneous absorber material. Unlike conventional control rods, the control rod according to the invention has stronger absorber material in an upper region thereof amounting approximately to 25% of the rod than in the remaining part therebelow. With this design concept, the heavier-worth control rod absorber material will push the HZP, EOL flux shape to the more typical hot full power shape which is reasonably balanced at the middle portion of the reactor core. In this manner, the need for an RRF penalty is eliminated. This design is used for all control rods in the core including shutdown banks. As mentioned hereinbefore, the AFI at HZP and EOL with conventional homogeneous control rods is approximately 60%. With the heavier-worth absorber material placed in the upper 25% of the control rod according to the invention, the AFI under the same conditions becomes 4% only.

The invention accordingly resides in a neutron absorbing control rod as disclosed in claim 1.

More particularly, the first neutron absorber material, preferably boron carbide, has a higher neutron absorbing capacity than the second neutron absorber material, which preferably is silver-indium-cadmium. Furthermore, the second neutron absorber material is greater in quantity than the first neutron absorber material. Particularly, the quantities of the first and second neutron absorber materials are represented by the respective lengths thereof, the second material being approximately three times longer than the first material.

A preferred embodiment of the invention will now be described, by way of example only, with reference to the accompanying drawings, in which:-

Figure 1 is an elevational view, partly in section, of a fuel assembly illustrated in vertically foreshortened form and with parts broken away for clarity; and

Figure 2 is an enlarged, vertically foreshortened, sectional view of a control rod embodying the invention.

In the following description, like reference characters designate like or corresponding parts throughout the several views of the drawings, and terms such as "forward", "rearward", "left", "right", "upwardly", "downwardly", and the like, are employed as words of convenience not to be construed as limiting terms.

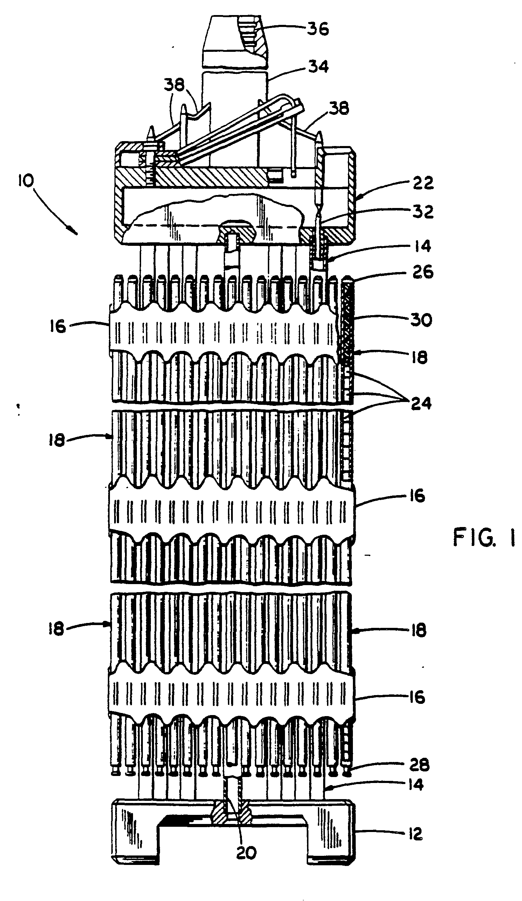

Referring to the drawings, and particularly to Figure 1, the fuel assembly illustrated therein and generally designated with the numeral 10 basically comprises a lower end structure or bottom nozzle 12 for supporting the assembly on the lower core plate (not shown) in the core region of a reactor (not shown), guide tubes or thimbles 14 extending upwards from the bottom nozzle 12, transverse grids 16 axially spaced along the guide thimbles 14, an organized array of elongate fuel rods 18 transversely spaced and supported by the grids 16, an instrumentation tube 20, and an upper end structure or top nozzle 22 attached to the upper ends of the guide thimbles 14. With the parts thus arranged, the fuel assembly 10 forms an integral unit capable of being handled without damaging the assembly parts.

Each of the fuel rods 18 contains nuclear fuel pellets 24 composed of fissile material, and has its opposite ends hermetically sealed by means of end plugs 26, 28. Usually, a plenum spring 30 is disposed between the upper end plug 26 and the pellets 24 to maintain the pellets firmly stacked within the rod 18. During operation, a liquid moderator/coolant such as water, or water containing boron, is pumped upwardly through the fuel assemblies of the core in order to extract therefrom heat for the production of useful work.

The fission process is controlled by means of control rods 32 which are reciprocally movable to the guide thimbles 14 located at predetermined positions within the fuel assembly 10. The top nozzle 22 includes a top cluster control mechanism 34 having an internally threaded cylindrical member 36 with a plurality of radially extending flukes or arms 38 connected to the control rods 32, the control mechanism 34 being operable to move the control rods 32 vertically in the guide thimbles 14.

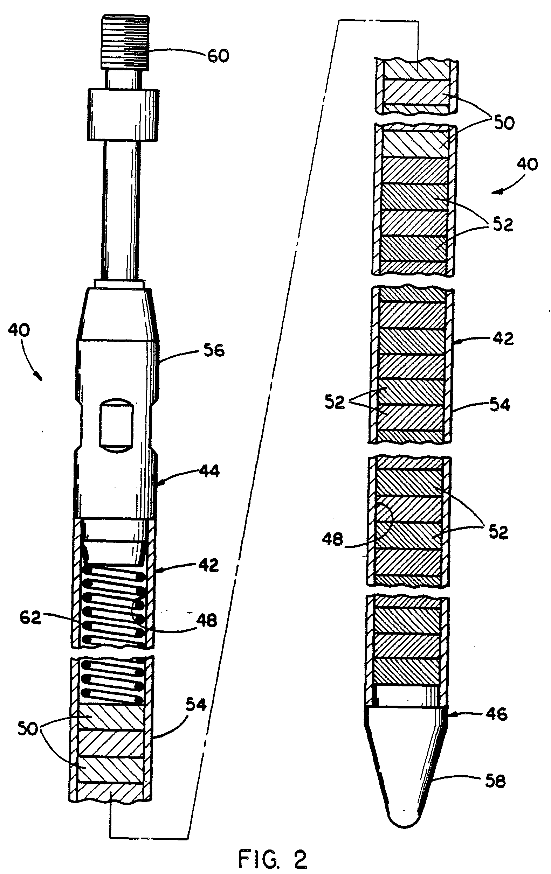

Turning now to Figure 2, it shows a control rod embodying the present invention and adapted to be used in an EOL cycle immediately preceding reactor shutdown.

The control rod embodying the invention and generally designated 40 herein includes an elongate hollow tubular member 42 defining a hermetically sealed chamber 48 between its opposite ends 44, 46. Having regard to movement of the control rod 40 into the fuel assembly 10, the lower end 46 of the member 42 is its leading end and the upper end 44 thereof is its trailing end. The control rod 40 includes further a first neutron absorber material 50, preferably in the form of pellets of boron carbide, contained in the chamber 48 and offset toward the upper end 44 of the tubular member 42, and a second neutron absorber material 52, preferably in the form of pellets of silver-indium-cadmium, contained in the chamber 46 and offset toward the lower end 46 of the tubular member 42.

The first neutron absorber material 50 (boron carbide) has a higher neutron absorbing capacity than the second neutron absorber material 52 (silver-indium-cadmium), specifically about twenty-five percent higher. Furthermore, the second neutron absorber material 52 is present in greater quantity than the first neutron absorber material 50. In particular, the quantities of the first and second neutron absorber materials 50, 52 are represented by the respective lengths thereof. The length of the second material 52 is approximately three times the length of the first material 50 or, in other words, the first absorber material 50 extends for about the upper twenty-five percent of the combined length of all the absorber material within the tubular member chamber 48, whereas the second absorber material 52 extends for the remaining lower approximately seventy-five percent of the combined length. Thus, the second neutron absorber material 52 is approximately three times longer than the first neutron absorber material 50.

Like conventional control rods, the tubular member 42 of the control rod 40 is formed of an elongate, thin-walled metallic cladding or tube 54 with end plugs 56, 58 sealing the opposite ends 44, 46 of the member 42. The upper end plug 567 has integrally formed therewith an upwardly extending stem section with an externally threaded end portion 60 for connection of the rod to the control mechanism 34. The lower end plug 58 is cone-shaped.

The absorber material pellets 52, 50 are slidably disposed within the chamber 48, being stacked one upon the other and resting upon the lower end plug 58. A plenum spring 62 interposed between the stack of pellets and the upper end plug 56 maintains an axially spaced relationship therebetween so as to maintain a space within the tubular member 42 for receiving gases generated by the pellets 50, 52 as they absorb neutrons in the control reaction.

Since the boron carbide absorber material is just in the upper twenty-five percent of the absorber material, there is essentially no concern with boron carbide swelling because it never enters the core until the reactor is at low power or shutdown. Also, there will be no impact on rodded peaking factor at high power level either because (a) rods are not allowed to be inserted deeply, and (b) the same material, i.e., silver-indium-cadmium in this case, is not changed from what is used previously for a particular reactor.

## Claims

1. A neutron absorbing control rod comprising an elongate tubular member with a leading end and a trailing end, having regard to the direction of insertion of the control rod into a fuel assembly of a nuclear reactor, and with a hermetically sealed chamber defined between said leading and trailing ends, characterized in that said chamber (48) contains a first stack of pellets composed of a first neutron absorbing material (50) and disposed nearer to the trailing end (44) than the leading end (46) of the tubular member (42) but spaced therefrom; a second stack of pellets composed of a second neutron absorbing material (52) and stacked between said leading and said first stack of pellets; and biasing means (62) disposed in the space between said trailing end and said first stack of pellets for maintaining the latter in stacked and abutting relationship with respect to said second stack of pellets; said first neutron absorbing material (50) having a higher neutron absorbing capacity than said second neutron absorbing material (52), and said second stack of pellets being of greater length than said first stack of pellets.

2. A control rod according to claim 1, characterized in that said first neutron absorbing material (50) has a neutron absorbing capacity approximately twenty-five percent higher than the neutron absorbing capacity of said second neutron absorbing material (52).

3. A control rod according to claim 1 or 2, characterized in that the quantity of said second neutron absorbing material (52) corresponds substantially to three times the quantity of said first neutron absorbing material (50).

4. A control rod according to claim 3, characterized in that said second neutron absorbing material (52) is approximately three times longer than said first neutron absorbing material (50).

5. A control rod according to any one of the preceding claims, characterized in that said first neutron absorbing material (50) is boron carbide.

6. A control rod according to any one of the preceding claims, characterized in that said second neutron absorbing material (52) is silver-indium-cadmium.

## Patentansprüche

1. Ein Neutronen absorbierender Steuerstab, bestehend aus einem länglichen röhrenförmigen Teil mit einem Vorder- und einem Hinterende, mit Hinsicht auf die Einsetzrichtung des Steuerstabes in einem Brennsatz eines Kernreaktors, und aus einer hermetisch abgedichteten Kammer zwischen dem Vorder- und dem Hinterende; dadurch gekennzeichnet, daß in der Kammer (48) ein erster Stapel aus Pellets bestehend aus einem ersten Neutronen absorbierenden Material (50) näher am Hinterende (44) als am Vorderende (46) des röhrenförmigen Teils (42), aber im Abstand vom Hinterende angeordnet ist; ein zweiter Stapel aus Pellets bestehend aus einem zweiten Neutronen absorbierenden Material (52) zwischen dem Vorderende und dem ersten Stapel der Pellets gestapelt ist; im Raum zwischen dem Hinterende und dem ersten Stapel aus Pellets einseitig wirkende Mittel (62) angeordnet sind, um diesen Stapel aus Pellets in gestapelter Form und anstoßend an den zweiten Stapel aus Pellets zu halten; wobei das erste Neutronen absorbierende Material (50) eine größere Absorptionskapazität aufweist als das zweite Neutronen absorbierende Material (52), und dieser zweite Stapel aus Pellets größer ist als er erste Stapel aus Pellets.

2. Steuerstab nach Anspruch 1, dadurch gekennzeichnet, daß die Neutronen-Absorptionskapazität des ersten Neutronen absorbierenden Materials (50) etwa 35% größer ist als die Absorptionskapazität des zweiten Neutronen absorbierenden Materials (52).

3. Steuerstab nach Anspruch 1 oder 2, dadurch gekennzeichnet, daß die Menge des zweiten Neutronen absorbierenden Materials (52) im wesentlichen dreimal so groß ist wie die Menge des ersten Neutronen absorbierenden Materials (50).

4. Steuerstab nach Anspruch 3, dadurch gekennzeichnet, daß das zweite Neutronen absorbierende Material (52) etwa dreimal so lang ist wie das erste Neutronen absorbierende Material (50).

5. Steuerstab nach einem der vorhergehenden Ansprüche, dadurch gekennzeichnet, daß das erste Neutronen absorbierende Material (50) aus Borcarbid besteht.

6. Steuerstab nach einem der vorhergehenden Ansprüche, dadurch gekennzeichnet, daß das zweite Neutronen absorbierende Material (52) aus Silber-Indium-Cadmium besteht.

## Revendications

1. Barre de commande absorbant les neutrons comprenant un long élément tubulaire avec une extrémité avant et une extrémité arrière, compte tenu du sens d'introduction de la barre de commande dans un assemblage combustible d'un réacteur nucléaire, et avec une chambre fermée de façon hermétique et formée entre lesdites extrémités avant et arrière, caractérisée en ce que la chambre (48) contient un premier empilement de pastilles composées d'une première matière (50) absorbant les neutrons et empilées plus près de l'extrémité arrière (44) que de l'extrémité avant (46) de l'élément tubulaire (42) mais en étant espacées de cette dernière, un second empilement de pastilles composées d'une seconde matière (52) absorbant les neutrons et empilées entre l'extrémité avant (46) et le premier empilement de pastilles, et un moyen de sollicitation (62) disposé dans l'espace entre l'extrémité arrière et le premier empilement de pastilles pour maintenir ce dernier empilé et portant contre le second empilement de pastilles, la première matière (50) absorbant les neutrons ayant une capacité d'absorption des neutrons supérieure à celle de la seconde matière (52) absorbant les neutrons, et le second empilement de pastilles ayant une longueur plus grande que celle du premier empilement de pastilles.

2. Barre de commande selon la revendication 1, caractérisée en ce que la première matière (50) absorbant les neutrons a une capacité d'absorption de neutrons environ vingt-cinq fois plus élevée que la capacité d'absorption de neutrons de la seconde matière (52) absorbant les neutrons.

3. Barre de commande selon la revendication 1 ou 2, caractérisée en ce que la quantité de la seconde matière (52) absorbant les neutrons correspond sensiblement à trois fois la quantité de la première matière (50) absorbant les neutrons.

4. Barre de commande selon la revendication 3, caractérisée en ce que la seconde matière (52) absorbant les neutrons a une longueur environ trois fois plus grande que celle de la première matière (50) absorbant les neutrons.

5. Barre de commande selon l'une quelconque des revendications précédentes, caractérisée en ce que la première matière (50) absorbant les neutrons est du carbure de bore.

6. Barre de commande selon l'une quelconque des revendications précédentes, caractérisée en ce que la seconde matière (52) absorbant les neutrons est une combinaison argent-indium-cadmium.

FIG. 1

FIG. 2

2